# EUROPEAN PATENT SPECIFICATION

(11) **EP 2 852 926 B1**
(45) Date of publication and mention of the grant of the patent: **08.07.2020**
(21) Application number: 13717928.9
(22) Date of filing: 05.04.2013
(51) Int. Cl.: G06Q 20/34, G07F 7/10, G06F 21/77, G06Q 20/20, G06Q 20/32, G06Q 20/36, G06Q 20/40, G06Q 20/42, H04W 12/06, H04W 4/80

(54) **SYSTEMS, METHODS, AND COMPUTER PROGRAM PRODUCTS FOR SECURING AND MANAGING APPLICATIONS ON SECURE ELEMENTS**
SYSTEME, VERFAHREN UND COMPUTERPROGRAMMPRODUKTE ZUR SICHERUNG UND VERWALTUNG VON ANWENDUNGEN AUF SICHEREN ELEMENTEN
SYSTÈMES, PROCÉDÉS ET PROGICIELS INFORMATIQUES POUR LA SÉCURISATION ET LA GESTION D'APPLICATIONS SUR DES ÉLÉMENTS SÉCURISÉS

(30) Priority: 24.08.2012 US 201261693089 P
(43) Date of publication of application: 01.04.2015
(73) Proprietor: Google LLC, Mountain View, CA 94043 (US)
(72) Inventor: WATSON, Curtis, W., Aubrey, TX 76227 (US)
(74) Representative: Maikowski & Ninnemann Patentanwälte Partnerschaft mbB
(86) International application number: PCT/US2013/035406
(87) International publication number: WO 2014/031183

(56) References cited:
- WO-A1-2012/042262
- Globalplatform: "GlobalPlatform Card Contactless Services Card Specification v2.2 - Amendment C Version 1.0 - Document Reference: GPC_SPE_025", , 1 February 2010 (2010-02-01), XP055019218, Retrieved from the Internet: URL:http://www.globalplatform.org/specific ationscard.asp [retrieved on 2012-02-13]

## Description

### BACKGROUND OF THE INVENTION

### Field of the Invention

The present invention generally relates to wallet companion applets and mobile wallets in mobile devices for use in mobile commerce, and more particularly to systems, methods, and computer program products for securing and managing applications on secure elements.

### Related Art

Payment and commerce applications are used in a mobile commerce environment to conduct transactions using a mobile device without the need for physical cash, checks, credit cards, or the like. These transactions may be financial (*e.g*., payments) or non-financial (*e.g*., venue admissions). In a mobile commerce environment, service providers (SPs) provide such mobile applications for deployment to customers' mobile devices. Service providers are companies, organizations or entities, such as banks, merchants, card associations, marketing companies, transit authorities, and the like, that provide services to customers.

A service may be an activity, capability, functionality, work, or use that is permitted or provided by a service provider, such as a payment service, credit, debit, checking, gift, offer or loyalty service, transit pass service, and the like. Services are linked to accounts (*e.g*., checking, debit, credit) issued by an SP. Each account contains a large amount of data such as financial information, personal customer information, transaction history, and the like, which may be used to execute or log transactions in a mobile commerce environment.

When properly configured and activated, mobile payment applications are deployed onto a mobile device and linked to a service and an SP-issued account. A customer can then use the mobile device to conduct a transaction, such as a contactless payment, at a point-of-sale (PoS) equipped with a near field communication (NFC) enabled reader module or the like.

During a contactless transaction, the customer positions the mobile device equipped with one or more payment applications into close proximity to the reader module, which transmits a request to the mobile device to activate a payment application to conduct the contactless transaction. Typical payment applications use a so-called "self-activation" privilege, which allows each application to independently authorize and activate a contactless transaction. Self-activation means that each application independently controls and manages its own activation and/or authorization. In the self-activation privilege configuration, such authorization generally is granted using a personal identification number (PIN) validation. Each payment application stores a corresponding PIN in the memory of the mobile device. During a contactless transaction, the customer authorizes activation of the payment application, for example, by inputting a PIN through the user interface of the mobile device. This, in turn, causes another application or hardware in the mobile device to compare the PIN entered by the customer against the stored PIN for a match.

Payment applications also can be deployed or configured without such a self-activation privilege. In such a configuration, the reader modules communicate with and access such payment applications without any authorization or validation.

One technical challenge involves making payment applications more secure. By accessing applications on a mobile device during a contactless transaction, a risk exists that the reader module can be used to perform unwanted or fraudulent transactions, loss of funds, compromised financial and customer data, identity theft, risk to the mobile device and applications, and the like.

Another technical challenge involves making SPs (including SP systems) and their corresponding payment applications more secure and efficient. Typical SPs are faced with the task of deploying payment applications to a variety of mobile devices, and ensuring that each payment application is configured to safely, efficiently, and effectively manage its own PIN and accessibility, while concurrently functioning with other payment applications on the same mobile device. Storing and managing PINs on the mobile device's non-volatile memory, as opposed to a separate and more secure system, jeopardizes security of the payment applications and of the mobile device.

Each mobile device may have a number of payment applications for each SP, with each payment application having its own PIN. As a result, customers are faced with the inefficient, complex, and potentially insecure burden of remembering multiple PINs, and inputting each PIN to authorize a corresponding contactless transaction.

In addition, reader modules are faced with the task of communicating with a potentially large number of payment applications. One technical challenge involves reducing processing power, while raising reliability and efficiency, in connection with determining the proper payment application with which to communicate to authorize a contactless transaction.

What matters from an SP's perspective is that a payment application is deployed to mobile devices, and that their payment application can be accessed and used to safely conduct transactions. From the perspective of a customer, what matters is that they can safely conduct transactions with minimal work or device interaction, and without compromising the security of their mobile devices or personal information. From the perspective of a reader module, what matters is that each reader can manage every transaction efficiently and accurately, and with as minimal processing time and resources as possible.

Patent document WO2012042262 A1, and industry standard document "GlobalPlatform Card Contactless Services Card Specification v2.2 - Amendment C Version 1.0-Document Reference: GPC_SPE_025" specify teachings related to the field of the invention.

### BRIEF DESCRIPTION OF THE INVENTION

The present invention provides systems, methods, and computer program products for securing and managing applications on secure elements. The invention is defined by the appended independent claims.

In one embodiment a system for securing and managing applications includes at least one memory coupled to a processor. Mobile wallet data is stored in the at least one memory. Authentication data is received from a mobile wallet. A determination is made as to whether the authentication data is valid, based on a comparison of the authentication data and the mobile wallet data. If the authentication data is valid, processing of one or more commands is enabled. A first command is received from the mobile wallet. A determination is made as to whether processing of the first command is enabled, and if the first command is enabled, the first command is processed.

In another embodiment, a method for securing and managing applications includes: receiving, from a mobile wallet, authentication data; determining if the authentication data is valid based on a comparison of the authentication data and mobile wallet data stored in at least one memory; enabling processing of one or more commands if the authentication data is valid; receiving a first command from the mobile wallet; determining if processing of the first command is enabled; and processing the first command if processing of the first command is enabled.

In another embodiment, a non-transitory computer-readable medium has stored thereon sequences of instructions for causing one or more processors to: receive, from a mobile wallet, authentication data; determine if the authentication data is valid based on a comparison of the authentication data and mobile wallet data stored in at least one memory; enable processing of one or more commands if the authentication data is valid; receive a first command from the mobile wallet; determine if processing of the first command is enabled; and process the first command if processing of the first command is enabled.

### BRIEF DESCRIPTION OF THE DRAWINGS

The features and advantages of the present invention will become more apparent from the detailed description set forth below when taken in conjunction with the following drawings.
Figure 1 is a diagram of a system for securing and managing applications on a secure element according to an exemplary embodiment.
Figure 2 is a diagram illustrating a lifecycle of a WCAp according to an exemplary embodiment.
Figure 3 is a diagram illustrating a lifecycle of WCAp security states according to an exemplary embodiment.
Figure 4 is flowchart illustrating a process for verifying a passcode according to an exemplary embodiment.
Figure 5 is a diagram of a CRS Mirror according to an exemplary embodiment.
Figure 6 is sequence diagram illustrating a process for selecting and activating a primary payment application according to an exemplary embodiment.
Figure 7 is a sequence diagram illustrating a process for managing a contactless transaction according to an exemplary embodiment.
Figure 8 is a sequence diagram illustrating a mutual authentication process between a mobile wallet and a server according to an exemplary embodiment.
Figure 9 is a block diagram of an exemplary system useful for implementing the present invention.

### DETAILED DESCRIPTION

### I. Overview

The example embodiments of the invention presented herein are directed to systems, methods, and computer program products for securing and managing applications, which are now described herein in terms of an example system in a mobile commerce environment. This is for convenience only and is not intended to limit the application of the present invention. In fact, after reading the following description, it will be apparent to one skilled in the relevant art(s) how to implement the following invention in alternative environments such as mobile marketing, advertising, ticketing, information services, browsing, and the like.

The terms "application," "applet," "widget," and/or the plural form of these terms are used interchangeably herein to refer to an application (functioning independently or in conjunction with other applications) or set or subset of instructions or code, which when executed by one or more processors (*e.g*., in a mobile device, card reader, terminal, point of sale (POS) system, or server) causes the processor(s) to perform specific tasks. For example, a wallet application can be used to conduct transaction- or interface-related functions such as storing, processing, accessing or transmitting financial, loyalty, offer, membership, or account data. A wallet application may also incorporate or interact with one or more payment applications, such as ExpressPay from American Express®, Discover® Network Zip^{SM}, MasterCard® PayPass™ and Visa payWave™ payment applets.

The terms "PIN," "passcode," and/or the plural form of these terms are used interchangeably herein to refer to a unique identifier used to authenticate a system, user, entity, and the like.

Generally, a mechanism is provided for securing and managing applications in a secure element (SE). Particularly, a wallet companion applet (WCAp) monitors, manages and/or secures certain types of applications associated with a mobile wallet, such as payment applications for making financial transactions or commerce applications for performing tasks associated with processing loyalty, offer, membership or account data.

WCAp may be an application running on a mobile device and performs functions such as: securely storing mobile wallet data, performing authentication such as a parity checks and passcode verifications, processing commands, maintaining wallet application data in a registry, managing (*e.g.*, activating and deactivating) applications, authenticating a server, and takes part in the processing of contactless transactions. The WCAp may also be a stand-alone (*i.e*., independent) system, configured to perform these functions.

In an exemplary embodiment, the state of the WCAp indicates its functionality (*e.g*., the types of commands that the WCAp will process). The WCAp is loaded onto a secure element, for example during manufacture of the secure element. In turn, the WCAp may be installed on the secure element. When installed, the functionality of the WCAp may be limited, for example, to processing certain commands such as a "Select" command, which renders the WCAp selectable. When selectable, the functionality of the WCAp is modified to process additional and/or different commands. When selectable, the WCAp also can be in a non-personalized or personalized state. In a non-personalized state, the WCAp lacks information necessary to conduct transactions. The WCAp may be personalized by receiving and/or storing information such as identifiers and passcodes. In one embodiment, the WCAp is placed in a personalized state. That is, in a personalized state, the WCAp is active and securely stores information such as mobile wallet data.

In an alternative exemplary embodiment, WCAp may be in one of several security states. The particular security state is determined based on the commands that the WCAp receives from the mobile wallet. Those commands include commands to select the WCAp, perform a parity check and/or passcode verification. In one embodiment, the WCAp security states are "Non-Selected," "Selected Non-Authenticated," and "Authenticated". In the Non-Selected state, the WCAp is out of context and only eligible to receive and process certain commands. In a Selected Non-Authenticated state, the WCAp has been selected (*e.g*., by processing a "Select" command), and it is in context and may process commands that do not require it to be authenticated. In the Authenticated state, the WCAp is authenticated (*e.g.*, by successfully performing a parity check or passcode verification), and may process commands that require the WCAp to be authenticated. Authentication of the mobile wallet may be achieved by performing a parity check or passcode verification, during which the WCAp compares data received from the mobile device to data stored on, or in connection with, the WCAp.

As noted above, WCAp monitors and secures certain applications. This is accomplished by maintaining a registry containing information about payment applications, such as application status, errors, and/or whether an application has been selected. This information may be received, for example, from an application or secure element environment, and is, in turn, used to track updates related to the applications. Using the registry, the WCAp manages (*e.g*., permits/denies) the activation of payment applications for use during contactless transactions.

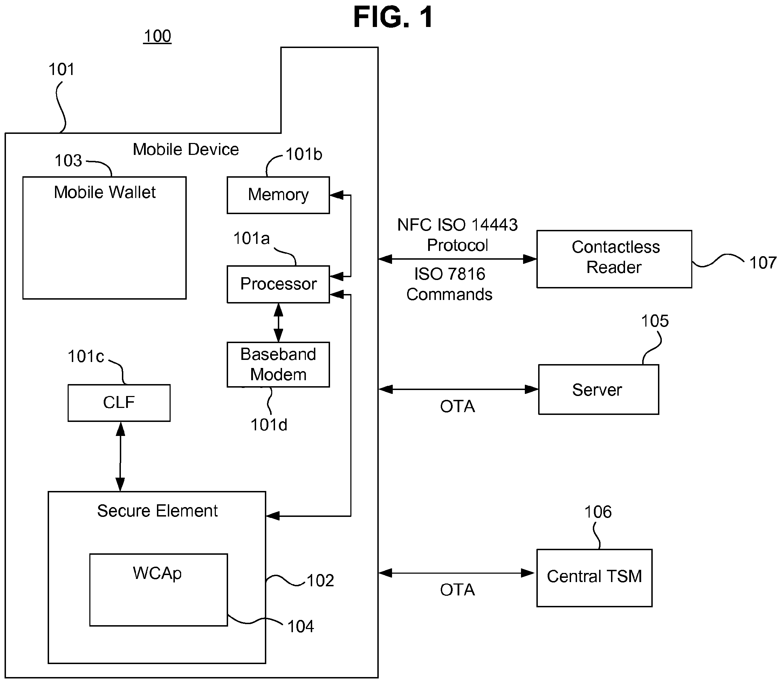

The features discussed above are described in further detail below, with reference to FIGs. 1 to 9.

### II. System

FIG. 1 is a diagram of a system 100 for securing and managing applications on a secure element according to an exemplary embodiment. As shown in FIG. 1, system 100 includes a mobile device 101, a secure element 102, a mobile wallet 103, a WCAp 104, a mobile wallet server (referred to herein as "server") 105, a central trusted service manager (TSM) 106, and a contactless reader 107.

The mobile device 101 may be, for example, a cellular phone or the like, and includes a processor 101a, memory 101b, a contactless frontend (CLF) 101c, a baseband modem 101d, and a user interface such as a display. The baseband modem 101d is a digital modem that is used for mobile network communications. The CLF 101c is circuitry which handles the analogue part of NFC communications and the communication protocol layers of a contactless transmission link. Moreover, the CLF 101c is used to exchange data between the secure element 102 and the contactless reader 107, for example, to execute contactless transactions.

The mobile device 101 also includes the secure element 102, which may be implemented as a Universal Integrated Circuit Card (UICC), embedded SE card, secure micro secure digital (microSD) card, and the like. The secure element 102 is generally considered secure because it is a self-contained system, including dedicated memory, and is protected by hardware and software hardening techniques that are verified by independent testing.

The secure element 102 may include an operating system such as GlobalPlatform™ Environment, (referred to below as "Open"), which provides an application programming interface to applications on the secure element, and other services such as: command dispatch, application selection, logical channel management, and content management. In such an environment, the secure element 102 may also include a Contactless Registry Service (CRS), CRS Application (also referred to below as "CRS Applet"), and/or Contactless Registry Event Listener (CREL) Application. The CRS is configured to manage and provide access to applications such as payment applications. The CRS Application is configured to provide application management, including management of the CRS, to an end user. The CREL Application is an application configured to receive notifications regarding changes and/or updates to applications. Such an environment is described in more detail in "GlobalPlatform Card - Contactless Services, Card Specification v2.2-Amendment C, Version 1.0.1.8." One shortcoming of such a GlobalPlatform™ configuration is the need for a CREL Application that independently manages a set or subset of applications on a secure element, and provides and/or restricts access to those applications using a single passcode.

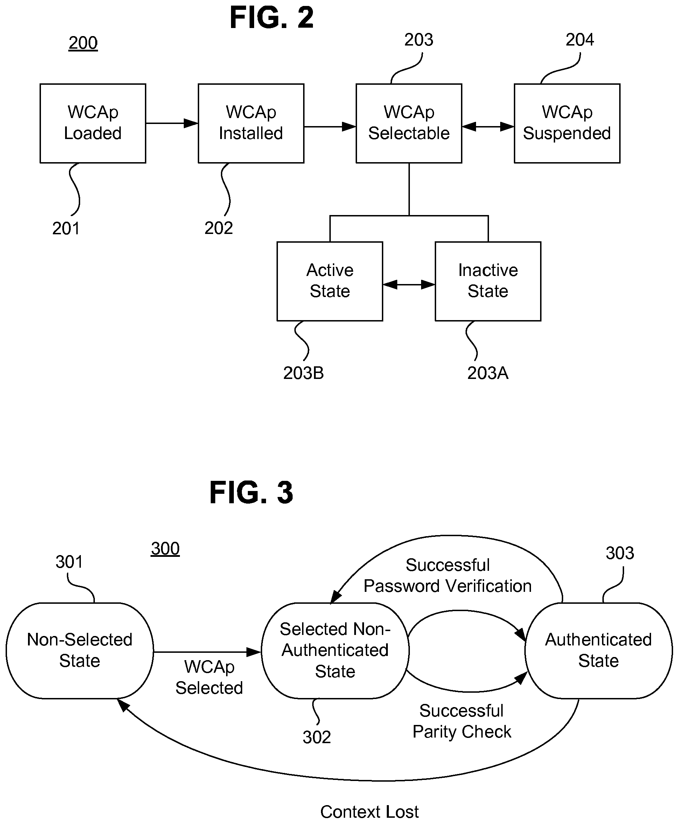

The secure element 102 includes (*e.g*., stored thereon) the WCAp 104 (described in further detail below with reference to FIGs. 2 to 5) and one or more payment applications. Each payment application is linked to a service and an account issued by an SP. The WCAp 104 and payment applications can be loaded onto the secure element 102, for example, during manufacture and/or configuration of the secure element. The WCAp 104 and payment applications may be personalized to enable their use to conduct transactions. Personalization of the WCAp 104 is described in further detail below with reference to Table 1.

In one embodiment, the WCAp 104 is personalized by a TSM such as central TSM 106. Typically, a central TSM manages communications to and from secure elements, and can be used, for example, to load data onto secure elements. U.S. Patent Application No. 13/653,160, entitled "Systems, Methods, and Computer Program Products for Interfacing Multiple Service Provider Trusted Service Managers and Secure Elements," which is incorporated herein by reference in its entirety, describes a central TSM for managing communications with secure elements.

The mobile wallet 103 (*i.e*., mobile wallet client) may be an application stored in the mobile device 101. The mobile wallet 103 includes instructions which, when executed by the processor of the mobile device 101, cause the mobile device 101 to act as an instrument, for example, for processing transactions such as contactless payments. The mobile wallet 103 communicates with the WCAp 104 to execute such transactions. In particular, the mobile wallet 103 communicates with the secure element 102 and/or the WCAp 104 using International Standards Organization (ISO) 7816 commands. It should be understood that these and other communications between devices may include communications with or through other intervening systems, hardware, and/or software.

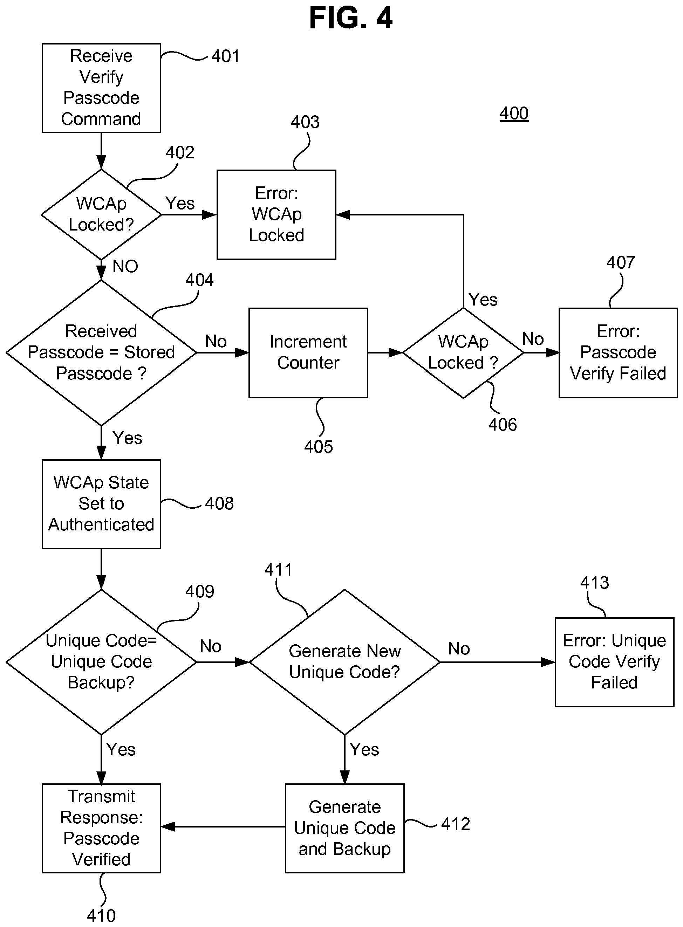

To communicate with the WCAp 104, the mobile wallet 103 must authenticate itself through either a successful PIN validation or parity check, which are described in further detail below with reference to FIG. 4, and Tables 1 and 2.

The WCAp 104 also includes a proximity payment system environment (PPSE). The PPSE is an application used to maintain a list of payment applications on a secure element, and provides accessibility to each payment application by making them visible or not visible (*i.e.*, accessible) to systems or devices.

In one embodiment, a customer may use the mobile device 101 to conduct a contactless transaction at a POS equipped with the contactless reader 107, such as a proximity coupling device (PCD) or NFC-enabled reader. The customer places the mobile device 101 within a predetermined required proximity to the contactless reader 107, which communicates with the CLF 101c of the mobile device 101 using NFC ISO 14443 protocols. The contactless reader 107 also communicates with the mobile wallet 103, WCAp 104, and/or payment applications on the mobile device 102 to execute contactless transactions.

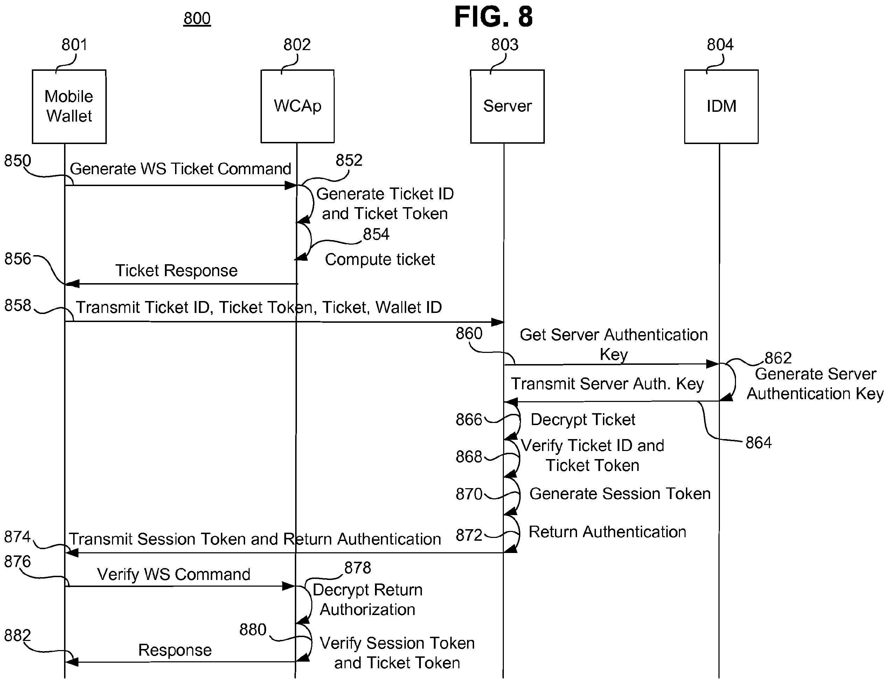

The WCAp 104 is also used to provide mutual authentication between the mobile wallet 103 and the server 105. The mobile wallet 103 and the server 105 communicate, for example, during activation of a mobile wallet, set up of a service account or payment application on a mobile wallet, or modification of a mobile wallet PIN. In particular, the WCAp 104 authenticates such communications by generating and verifying tickets (*e.g*., credentials). This mutual authentication is described in further detail below with reference to FIG. 8.

### III. Process

A. Personalizing a WCAp

FIG. 2 is a diagram illustrating a lifecycle 200 of a WCAp (*e.g*., FIG. 1, WCAp 104), according to an exemplary embodiment. In block 201 ("WCAp Loaded"), the WCAp 104 is loaded onto a secure element (*e.g*., FIG. 1, secure element 102), for example, during manufacture of the secure element 102. In one embodiment, loading the WCAp 104 includes loading a package including a Java converted applet (CAP) file containing all classes and interfaces of the WCAp 104, onto the secure element 102. In block 201, the WCAp 104 is not functional (*i.e*., cannot be used to conduct transactions).

In block 202 ("WCAp Installed"), the WCAp 104 is installed in the secure element 102. In particular, installation of the WCAp 104 includes unpacking a load file, linking executable code, and allocating memory in the secure element 102.

In block 203 ("WCAp Selectable"), the WCAp 104 is made selectable, for example, by the mobile wallet 103 or a central TSM (*e.g*., FIG. 1, central TSM 106). Moreover, in addition to being selectable, the WCAp 104 is either in a personalized (*i.e*., active) or not personalized (*i.e*., inactive) state, as illustrated by blocks 203A and 203B, respectively.

By default, the WCAp 104 is placed in a not-personalized state once it changes from being installed to selectable.

In turn, the WCAp 104 may be personalized (*e.g*., activated) by the central TSM 106 using commands to store information, such as mobile wallet data. Once personalized, the WCAp 104 can be updated by the central TSM 106 to store updated information (*e.g*., updated mobile wallet data). The process of personalizing the WCAp 104 includes receiving information from, for example, the mobile wallet 103, and storing at least a portion of that information in and/or associated with the WCAp 104. The WCAp 104 serves as a secondary secure storage of data, such as mobile wallet data, which is used by the mobile wallet 103 to process transactions. Table 1, below, illustrates examples of data stored in the WCAp 104, including elements and corresponding descriptions.

**Table 1**

| Examples of Data Stored in a WCAp | |
|---|---|
| Element | Description |
| SIM ID | Unique identifier of a SIM card (*e.g*., ICCID) |
| Device ID | Unique identifier of a mobile device (*e.g*., IMEI, MEID, MAC Address) |
| Wallet ID | Unique identifier of a mobile wallet |
| Wallet Passcode | Passcode used to authenticate a use or user of a mobile wallet |
| Wallet Server Key | Key used to authenticate a mobile wallet or WCAp to a server |
| Wallet Server Key Verification Code | Code used to verify a wallet server key |
| Widget Authentication Blob | Unique data corresponding to a widget |
| Wallet Unique Code | Unique code generated and stored for a mobile wallet by a WCAp |

Referring to Table 1, the Wallet Passcode (referred to below as "passcode") is a four character code initially assigned by the central TSM 106 during personalization of the WCAp 104. However, the passcode may subsequently be changed. Passcodes are described in further detail below with reference to FIGs 3 and 4. Server Authentication Key and Server Authentication Key Verification Code are described in further detail below with reference to FIGs. 3 and 8.

The Widget Authentication Blob includes data corresponding to a widget. A widget is a type of application that may function in conjunction with other applications. The Widget Authentication Blob includes data such as a Widget ID, a Widget Signature, and a Widget Version. The Widget ID is a unique identifier of a widget. The Widget Signature is a hash value computed by the mobile wallet for each widget. The Widget Version is the version number and/or identifier of each widget.

The WCAp 104 stores and provides means for verifying widget data. In particular, the Widget Authentication Blob is used by the WCAp to verify the identity of a widget. Such verification can be achieved using a Verify Widget command, in which widget data is sent by the mobile wallet 103 to the WCAp 104 to be compared with the Widget Authentication Blob data stored in the WCAp 104. If the widget data sent in the command matches the Widget Authentication Blob data, the WCAp 104 transmits a response to the mobile wallet indicating that the widget has been verified.

Moreover, during personalization of the WCAp 104, the central TSM 106 registers the WCAp 104 as a CREL Application. In general, a CREL Application is an application that is used to track and/or manage multiple applications using a CRS and/or a CRS Application. The CRS is a registry of applications on a secure element.

The WCAp 104, which is registered as a CREL Application, includes a mirror (*i.e.*, copy or duplicate) of the CRS (referred to below as "CRS Mirror") to track and/or manage applications associated with the mobile wallet 103. That is, the CRS Mirror of the WCAp 104 tracks and/or manages all or a subset of the applications in the CRS, particularly those applications that have been installed and/or provisioned by the central TSM 106. Tracking and/or managing applications includes any functions and processes related to the use, access, authorization, activation, and or information update of those applications.

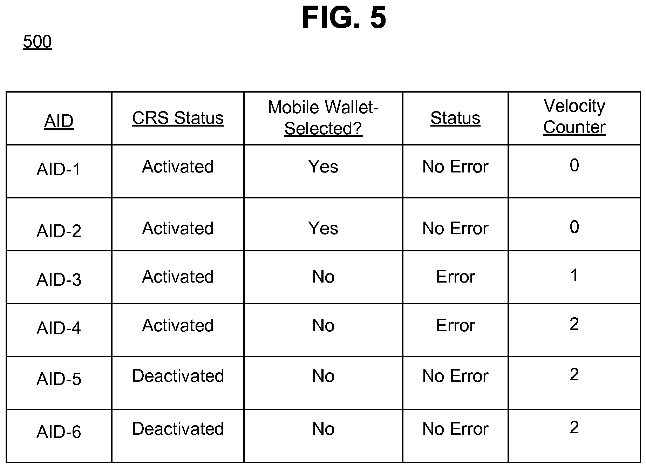

As a CREL, the WCAp 104 receives notifications of events related to applications tracked by the CRS Mirror, such as a status change of an application. CRELs and CRSs are discussed in further detail below with reference to FIGs. 5 to 7. In block 204 ("WCAp Suspended"), the WCAp 104 is suspended, during which its functionality is locked. Although not illustrated in FIG. 2, the WCAp 104 may be terminated. When terminated, the WCAp 104 is deleted from the secure element 102 by the central TSM 106.

### B. Authenticating a WCAp

FIG. 3 is a diagram illustrating a lifecycle 300 of WCAp security states (*e.g*., Non-Selected, Selected Non-Authenticated, Authenticated), according to an exemplary embodiment. The WCAp will process certain application protocol data unit (APDU) commands (referred to herein as "commands") according to the security state of the WCAp.

In block 301 ("Non-Selected State"), a WCAp (*e.g*., FIG. 1, WCAp 104) is in a Non-Selected state. In the Non-Selected state, the WCAp 104 is out of context and only eligible to receive and process certain commands. Table 2 below illustrates examples of commands that can be processed by the WCAp 104 when it is in a particular security state, including when it is in the Non-Selected state.

**Table 2**

| Examples of Acceptable Commands During WCAp Security States | | | |
|---|---|---|---|
| Command | Non-Selected | Selected Non-Authenticated | Authenticated |
| Select | Yes | Yes | Yes |
| Store Data | No | N/A | N/A |
| Get Data | No | N/A | N/A |
| Fetch WCAp Status | No | Yes | Yes |
| Parity Check | No | Yes | Yes |
| Verify Passcode | No | Yes | Yes |
| Verify Widget | No | No | Yes |
| Generate WS Ticket | No | No | Yes |
| Verify WS | No | No | Yes |
| Put Pay Settings | No | No | Yes |
| Return Version | No | Yes | Yes |

In turn, the WCAp 104 can be selected (*e.g*., FIG. 2, block 203, "WCAp Selectable") by receiving a Select command.

In block 302 ("Selected Non-Authenticated State"), the WCAp 104 is in a Selected Non-Authenticated state, after being selected by receiving a Select command. In the Selected Non-Authenticated state, the WCAp 104 is in context and may process commands that do not require it to be in an Authenticated state, as described above with reference to Table 2.

In turn, the WCAp 104 can be authenticated using a parity check or a passcode verification, thereby placing the WCAp 104, in block 303 ("Authenticated State"), in an Authenticated state. Parity checks and passcode verifications are performed as described below.

In block 303 ("Authenticated State"), the WCAp 104 is in an Authenticated state, after successfully performing a parity check and/or passcode verification ("Successful Passcode Verification" or "Successful Parity Check"). In the Authenticated state, the WCAp 104 may process commands, as described above with reference to Table 2.

As further illustrated in FIG. 3, when the WCAp 104 is in an Authenticated state, it can lose its context ("Context Lost") and be placed in the Non-Selected state (*i.e*., block 301). Moreover, the WCAp 104 can be selected ("WCAp Selected") and thus be placed in the Selected Non-Authenticated state.

### 1. Verifying a Passcode

As discussed above in more detail with reference to Table 1, the WCAp 104 stores a passcode associated with a mobile wallet (*e.g*., FIG. 1, mobile wallet 103). The passcode may be used to place the WCAp 104 in an Authenticated state and/or to activate a payment application. The passcode may be placed in an ON or OFF state (*i.e*., indicating whether or not a passcode is required for authentication), and that state is stored outside of the WCAp 104.

The passcode is initially set during the personalization of the WCAp 104, which is described above with reference to FIG. 2 and Table 1. In particular, during setting of the passcode, the mobile wallet 103 initially retrieves and/or receives activation data (*e.g*., passcode, Wallet ID, Device ID, SE ID) from a mobile device (*e.g*., FIG. 1, mobile device 101) or a user, for example, via a user interface of the mobile device 101. In turn, the mobile wallet 103 transmits a request to a server (*e.g*., FIG. 1, server 105) to activate the WCAp 104 corresponding to the SE ID in the activation data. The server 105 then transmits a request, including the activation data, to a central TSM (*e.g*., FIG. 1, central TSM 106) to activate the WCAp 104. The central TSM 106 stores at least a portion of the received activation data, including the passcode, in the WCAp 104.

The WCAp 104 includes a counter referred to as a "retry counter," which is incremented when a passcode verification attempt fails (*i.e*., a submitted passcode does not match the set password stored in the WCAp). The WCAp 104 and/or passcode may become locked when the retry counter exceeds a predetermined limit. The retry counter is reset to zero each time a passcode verification attempt succeeds (*i.e*., a submitted passcode matches the set password stored in the WCAp).

FIG. 4 is a flowchart illustrating a process 400 for verifying a passcode, according to an exemplary embodiment. At block 401 ("Receive Verify Passcode Command"), the WCAp 104 receives a Verify Passcode command from the mobile wallet 103, including a passcode.

At block 402 ("WCAp Locked?"), the WCAp 104 determines whether it is locked (*i.e*., FIG. 2, block 204, "WCAp Suspended"). The WCAp 104 and/or the passcode may become locked, for example, if the retry counter exceeds the predetermined limit. When locked, the WCAp 104 does not process the Verify Passcode command. If a determination is made that the WCAp 104 is locked, the WCAp 104 transmits, at block 403 ("Error: WCAp Locked"), an error response to the mobile wallet 103, indicating that the WCAp 104 and/or passcode are/is locked.

Alternatively, if a determination is made at block 402 that the WCAp 104 is not locked, the WCAp 104 determines, at block 404 ("Received Passcode = Stored Passcode?"), whether the passcode received in the Verify Passcode command matches the passcode stored in the WCAp 104. If a determination is made at block 404 that the received passcode does not match the stored passcode, the WCAp 104 increments the retry counter, at block 405 ("Increment Counter").

In turn, the WCAp 104 determines, at block 406 ("WCAp Locked?"), whether the WCAp 104 and/or passcode are/is locked. If a determination is made that the WCAp 104 and/or passcode are/is locked, the WCAp 104 transmits, at block 403 ("Error: WCAp Locked"), an error response to the mobile wallet 103, indicating that the WCAp and/or passcode are/is locked.

If a determination is made at block 406 that the WCAp 104 and/or passcode are/is not locked, the WCAp 104 transmits, at block 407 ("Error: Passcode Verify Failed"), an error response to the mobile wallet 103, indicating that the Verify Passcode command failed (*i.e*., passcode was not successfully verified). The error response transmitted at block 407 may also include information indicating the number of passcode verification attempts remaining before the retry counter exceeds the predetermined limit.

If a determination is made at block 404 that the received passcode matches the stored passcode, the WCAp 104 sets its security state to Authenticated, at block 408 ("WCAp State Set to Authenticated"). The WCAp 104 may then process commands, as described above with reference to Table 2.

At block 409 ("Unique Code = Unique Code Backup?"), the WCAp 104 determines whether the Wallet Unique Code matches a Wallet Unique Code Backup, both of which are stored in the WCAp 104. If the WCAp 104 determines that the Wallet Unique Code matches the Wallet Unique Code Backup, the WCAp 104 transmits, at block 410 ("Transmit Response: Passcode Verified"), a response including the Wallet Unique Code to the mobile wallet 103, indicating that the passcode was successfully verified.

If a determination is made at block 409 that the Wallet Unique Code does not match the Wallet Unique Code Backup, the WCAp 104 determines, at block 411 ("Generate New Unique Code?"), whether the Verify Passcode command received at block 401 included instructions to generate a new Wallet Unique Code. If so, the WCAp 104 generates and stores a new Wallet Unique Code and Wallet Unique Code Backup, at block 412 ("Generate Unique Code and Backup"), and transmits the new Wallet Unique Code to the mobile wallet 103, at block 410, indicating that the passcode was successfully verified.

Alternatively, if a determination is made at block 411 that the verify passcode command received at block 401 did not include instructions to generate a new Wallet Unique Code, the WCAp 104 transmits an error response to the mobile wallet 103, at block 413 ("Error: Unique Code Verify Failed"), indicating that the verification of the Wallet Unique Code failed.

### 2. Performing a Parity Check

As discussed above in more detail with reference to Table 1, the WCAp 104 stores data, which may include a Device ID, a SIM ID, and/or a Wallet ID. The WCAp 104 performs a parity check using at least a portion of this data.

In particular, the mobile wallet 103 transmits to the WCAp 104 a Parity Check command, including a Device ID, a SIM ID, and/or a Wallet ID. At least one of the data elements received in the Parity Check command is compared to the same type of data element stored in the WCAp 104.

In one embodiment, the Device ID and Wallet ID received in the Parity Check command are compared to the Device ID and Wallet ID stored in the WCAp 104. If a determination is made that the received Device ID and Wallet ID match (*i.e*., have the same values as) the Device ID and Wallet ID stored in the WCAp 104, the WCAp 104 transmits a response to the mobile wallet 103, indicating that the parity check was successful.

Alternatively, if a determination is made that the received Device ID and Wallet ID do not match the Device ID and Wallet ID stored in the WCAp 104, the WCAp 104 transmits a response to the mobile wallet 103 indicating that the parity check failed. The WCAp 104 may also transmit, in the response to the mobile wallet 103, information indicating the reason for the failure of the parity check (*e.g*., incorrect values received in command, information missing in command, element verification failed, etc.).

### C. WCAp Management of Payment Applications

As described above in further detail with reference to FIG. 1, a WCAp (*e.g*., FIG. 1, WCAp 104) is registered as a CREL Application for payment applications associated with the mobile wallet 103 (*i.e*., applications installed or instantiated by a central TSM (*e.g*., FIG. 1, central TSM 106)).

FIG. 5 is a diagram of a CRS Mirror 500 according to an exemplary embodiment. The CRS Mirror 500 is a copy or duplicate of a CRS on a secure element (*e.g*., FIG. 1, secure element 102), and includes all or a portion of the application information of the CRS.

As a CREL, the WCAp 104 tracks and/or manages payment applications using the CRS Mirror 500, which includes information used to track and/or manage the payment applications. As illustrated in FIG. 5, the CRS Mirror 500 includes information related to certain types of applications, for example, applications installed or instantiated by the central TSM 106. Each payment application is tracked and/or managed by the CRS Mirror 500 using a unique corresponding application identifier (AID). FIG. 5 includes information used to track six applications identified as AID-1 to AID-6.

Moreover, as a CREL Application, the WCAp 104 receives notifications regarding changes and/or updates in the CRS related to applications that are also tracked by the CRS Mirror 500 (*i.e*., AID-1 to AID-6). These notifications may be related to, for example, the activation of a payment application. Upon receiving such notifications, the WCAp 104 updates the CRS Mirror 500 so that its information matches the information in the CRS.

The CRS Mirror 500 also includes information for each payment application (*i.e*., corresponding to each AID) such as: CRS Status (*i.e*., Activated or Deactivated); Mobile Wallet-Selected (*i.e*., indication of whether or not a payment application has been selected, for example, via a Select command); Status (*i.e*., Error, No Error, Deadlock); and/or Velocity Counter. FIG. 5 includes a column corresponding to each of these types of information.

The CRS Status indicates whether a payment application is activated or deactivated, as indicated in the CRS.

A payment application is "mobile wallet-selected" when a mobile wallet transmits a Select command to the WCAp and it is processed successfully, and the application has not lost its Selected state due, for example, to the expiration of a predetermined amount of time.

The Status of a payment application illustrated in the CRS Mirror 500 indicates whether there is a mismatch between the CRS Status field and the Mobile Wallet-Selected field. For example, if the CRS Status of a payment application is listed as Activated (*i.e.*, the application is listed as Activated in the CRS), and the Mobile Wallet-Selected field is a "Yes", then the Status is set to "No Error." Alternatively, if the CRS Status of the payment application is listed as Deactivated and the Mobile-Wallet Selected filed is a "Yes," the Status of the payment application is listed to "Error," indicating that the CRS and the CRS Mirror have a mismatch. The Status of a payment application may also be "Deadlock," in the event that a malicious application attempts to use a payment application, or if the payment application was initially incorrectly activated.

The velocity counter is a security mechanism that limits the number of transactions that can be executed and/or processed without the need to communicate with a mobile wallet on a mobile device.

### 1. Selecting and Activating a Payment Application

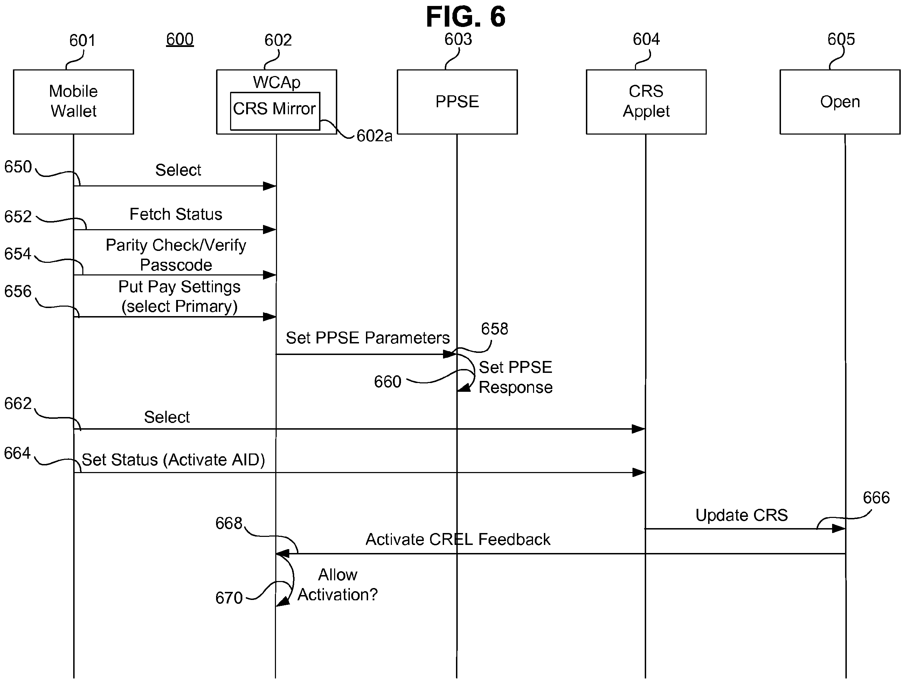

Each payment application corresponds and/or is linked to an account (*e.g*., credit account), which may be linked to a payment instrument (*e.g*., credit card). FIG. 6 is a sequence diagram illustrating a process 600 for selecting and activating a primary (*i.e.*, default) payment application (*i.e.*, the application linked to a primary account and/or payment instrument to be used for transactions by a mobile wallet), according to an exemplary embodiment. Steps 650 to 660 in FIG. 6 illustrate a process for selecting a primary payment application.

At step 650 ("Select"), a mobile wallet 601 (*e.g*., FIG. 1, mobile wallet 103) transmits a Select command to a WCAp 602 (*e.g*., FIG. 1, WCAp 104), which includes a CRS Mirror 602a (*e.g*., FIG. 5, CRS Mirror 500). The Select command includes an AID of a payment application to be selected. The WCAp 602 may transmit a response to the mobile wallet 601 indicating whether the Select command was successfully processed or whether an error occurred (*e.g*., WCAp locked, application not found, account linked to application is suspended, incorrect AID).

In turn, at step 652 ("Fetch Status"), the mobile wallet 601 transmits a Fetch Status command to the WCAp 602, to obtain information about the WCAp 602 and the secure element on which the WCAp 602 is installed. In particular, the WCAp 602 receives the Fetch Status command and, in turn, retrieves information from the secure element related to the WCAp 602 and other payment applications on the secure element. This information includes, for example, the status and/or settings of applications on the secure element. The WCAp 602 may then transmit a response including some or all of the retrieved information to the mobile wallet 601.

At step 654 ("Parity Check / Verify Passcode"), the mobile wallet 601 transmits a Verify Passcode or Parity Check command to the WCAp 602, so as to authenticate the WCAp 602 (*i.e*., place the WCAp 602 in an Authenticated state), as discussed in more detail above with reference to FIGs. 3 and 4. The WCAp 602 may transmit a response to the mobile wallet 601 indicating whether or not the parity check and/or passcode verification were successful. That is, in particular, this response may include information indicating whether: the command was successfully processed, there were incorrect values in the command data, the WCAp is inactive or not yet personalized, or the passcode verification or parity check failed.

If the Verify Passcode and/or Parity Check commands are successfully processed (*i.e*., WCAp 602 is in an Authenticated state), the mobile wallet 601, in turn, transmits a Put Pay Settings command, at step 656 ("Put Pay Settings (Select Primary)"), to the WCAp 602. A Put Pay Settings command may be used to enable and disable transactions, turn payment override ON and OFF, and select a primary payment application. Moreover, the Put Pay Settings command is processed when the WCAp 602 is in an Authenticated state.

The Put Pay Settings command transmitted at step 656 includes instructions to select an application corresponding to an AID included in the command as the primary application.

In an alternative embodiment, a Put Pay Settings command to select a primary payment application can include multiple AIDs, for example, to select multiple payment applications as primary applications.

At step 658 ("Set PPSE Parameters"), the WCAp 602 transmits a Set PPSE Parameters command to the PPSE 603. PPSE parameters include: Primary Payment AID (*i.e*., AID of primary payment application), Transaction Enable/Disable (*i.e*., indicator of whether or not transactions may be processed), and/or Payment Override (*i.e.*, indicator of whether or not a mobile device is eligible to be used for transactions). In particular, at step 658, the Set PPSE Parameters command includes an AID and instructions to set an application corresponding to that AID as the primary payment application.

In turn, at step 660 ("Set PPSE Response"), the PPSE 603 processes a Set PPSE Response command. A PPSE Response may be an error, a null response, or a normal response. An error indicates that the passcode is locked, a primary application is not selected, and/or payments are disabled (*i.e*., not enabled). A null response indicates that payment override is ON. A normal response indicates that a primary application is selected, payment override is OFF, passcode is not locked, and payments are enabled. A normal response also includes information corresponding to one or more payment applications (*e.g*., AID, label, priority indicator), indicating which applications may be selected to conduct a transaction. The PPSE 603 may transmit the PPSE Response to other systems including, for example, a contactless reader used in a contactless transaction.

The sequence diagram of FIG. 6 further illustrates a process for activating a payment application, as illustrated by steps 662 to 670.

Once the primary payment application has been selected (*i.e.*, steps 650 to 660) the mobile wallet 601 transmits a Select command to a CRS Applet 604, at step 662 ("Select"). The CRS Applet 604 includes a CRS and is used to manage payment applications on the secure element. The CRS Applet 604 also functions as an interface to Open 605, which, as described above with reference to FIG. 1, is a platform and/or environment of a secure element.

The Select command transmitted at step 662 includes an AID of a payment application to be selected. The CRS Applet 604 may transmit a response to the mobile wallet 601 indicating whether the Select command was successfully processed or whether an error occurred.

In turn, at step 664 ("Set Status (Activate AID)"), the mobile wallet 601 transmits a Set Status command to the CRS Applet 604, including an AID, status (*e.g*., activate, deactivate), and instructions to set the status of a payment application corresponding to the AID to Activated. In turn, at step 666 ("Update CRS"), the CRS Applet 604 transmits an Update CRS command to Open 605, including data (*e.g*., AID, status) to update the CRS to reflect that the payment application corresponding to the AID has been activated.

At step 668 ("Activate CREL Feedback"), Open 605 transmits CREL Feedback to the WCAp 602, indicating that an update to a payment application tracked in the CRS Mirror 602a has occurred. The CREL Feedback also includes information (*e.g*., AID, status) for updating the CRS Mirror 602a to match the CRS.

In turn, the WCAp 602 determines whether to allow activation of the payment application, at step 670 ("Allow Activation?"). For example, the WCAp 602 determines whether the status of the AID in the CREL Feedback matches the Mobile-Wallet Selected field in the CRS Mirror 602a, as described above with reference to FIG. 5. If a mismatch does not exist, the WCAp 602 allows activation of the payment application and sets the CRS Status of the corresponding AID in the CRS Mirror 602a to Activated. Alternatively, if a mismatch exists, the WCAp 602 will refuse activation of the payment application and will reset the payment application to deactivated in the CRS Mirror 602a.

In an alternative embodiment, a payment application may be linked (*i.e*., associated with) multiple accounts (*e.g*., credit account, checking account). In such a case, each account is linked to a unique AID corresponding to a payment application. As a result, selecting a primary application includes selecting a primary AID, which corresponds to an account and a payment application.

### 2. Managing a Contactless Transaction and Payment Applications

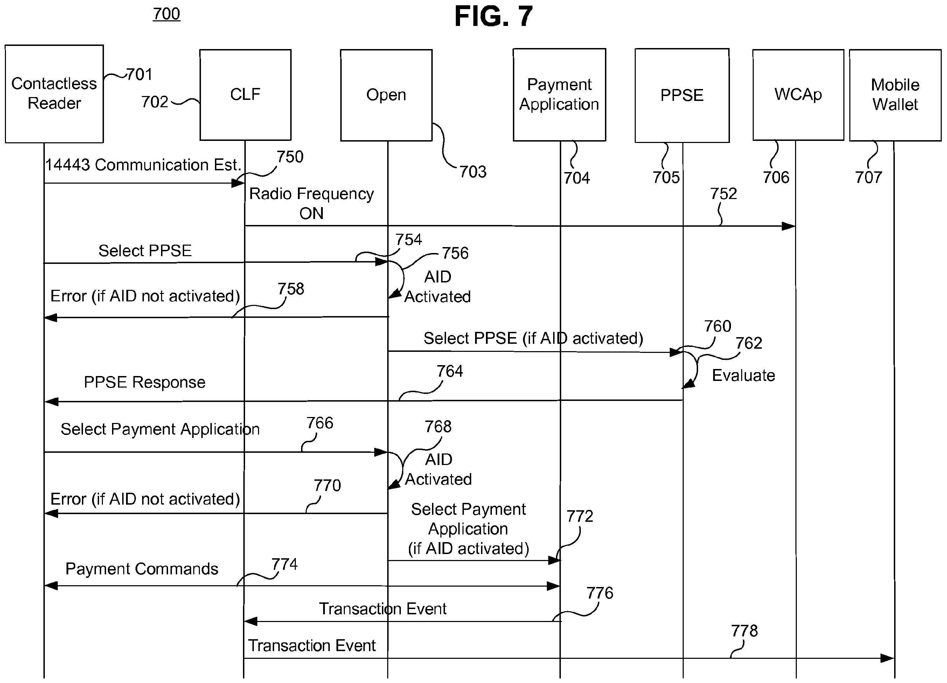

FIG. 7 is a sequence diagram illustrating a process for managing a contactless transaction 700 according to an exemplary embodiment.

A contactless transaction (*e.g*., payment) is performed using an application, such as payment application 704, which is linked to a mobile wallet installed on a mobile device (*e.g*., FIG. 1, mobile device 101). The payment application is also linked to an account (*e.g*., checking account).

A transaction, such as the contactless transaction 700, is initiated by placing the mobile device equipped with a CLF 702 within a predetermined proximity to a contactless reader 701 at a PoS. At step 750 ("14443 Communication Est."), an ISO 14443 communication (*i.e*., using NFC ISO 14443 protocols) is established between the CLF 702 in the mobile device and the contactless reader 701 at the PoS. In turn, at step 752 ("Radio Frequency ON"), the CLF 702 turns the radio frequency connectivity of the WCAp 706 to the ON state.

At step 754 ("Select PPSE"), the contactless reader 701 transmits a Select PPSE command to Open 703, to select the PPSE 705. The Select PPSE command includes the AID of the PPSE 705. Open 703, in turn, activates the PPSE 705 by setting the status of the AID received in the command (*i.e*., the AID of PPSE 705) to Activated, at step 756 ("AID Activated"). Setting the status of the AID to Activated includes updating the CRS with the status of the AID.

If the PPSE 705 is not successfully activated, Open 703 transmits an error message to the contactless reader 701, at step 758 ("Error (if AID not activated)"). Alternatively, at step 760 ("Select PPSE (if AID activated)"), Open 703 transmits a Select command to the PPSE 705, including the AID of the PPSE 705. In turn, at step 762 ("Evaluate"), the PPSE 705 performs an evaluation to determine the status of payment applications (*i.e*., whether a primary payment application is selected, payment override is ON or OFF, passcode is locked or unlocked, and/or payments are enabled or disabled) on the secure element.

At step 764 ("PPSE Response"), the PPSE 705 transmits a response to the contactless reader 701, based on the evaluation performed at step 762. The response may be an error, a null response, or a normal response. An error indicates that the passcode is locked, a primary application is not selected, and/or payments are disabled (*i.e*., not enabled). A null response indicates that payment override is ON. A normal response indicates that a primary application is selected, payment override is OFF, passcode is not locked, and payments are enabled. A normal response also includes information corresponding to one or more payment applications (*e.g*., AID, label, priority indicator), indicating which applications may be selected to conduct a transaction.

The contactless reader 701, at step 766 ("Select Payment Application"), transmits a Select command to Open 703, including the AID of the payment application to use in the transaction (*i.e*., payment application 704). In turn, at step 768 ("AID Activated"), Open 703 activates the payment application, by setting the status corresponding to the AID transmitted at step 766 to Activated. This may be done, for example, by changing the status of the AID in the CRS.

If the payment application is not successfully activated, Open 703 transmits an error message to the contactless reader 701, at step 770 ("Error (if AID not activated)"). Alternatively, at step 772 ("Select Payment Application (if AID activated)"), Open 703 transmits a Select command to the payment application 704, which corresponds to the AID included in the Select command transmitted in step 766.

At step 774 ("Payment Commands"), payment commands may be transmitted between the contactless reader 701 and the payment application 704 in order to perform the contactless transaction. Payment commands may be APDU commands transmitted according to EMV (*i.e*., Europay, MasterCard®, Visa®), ISO 7816, or ISO 144443 standards, in order to complete a payment transaction. These commands include, for example, Get Processing Options, External Authenticate, Read Record, Compute Cryptogram, and the like.

At step 776 ("Transaction Event"), the payment application 704 transmits a transaction event to the CLF 702. A transaction event provides information to a mobile wallet indicating that a transaction, such as a contactless payment, has been completed.

In turn, at step 778 ("Transaction Event"), the CLF 702 transmits a transaction event to the mobile wallet 707 equipped in the mobile device. As a result, the mobile wallet 707 receives information originated by the payment application 704, indicating that a transaction has been completed.

### D. Mutual Authentication Between Mobile Wallet and Server

FIG. 8 is a sequence diagram illustrating a mutual authentication process 800 between a mobile wallet 801 (*e.g*., FIG. 1, mobile wallet 103), including a WCAp 802 (*e.g*., FIG. 1, WCAp 104), and a server 805 (*e.g*., FIG. 1, server 105).

At step 850 ("Generate WS Ticket Command"), the mobile wallet 801 transmits a Generate WS Ticket command to the WCAp 802. As discussed above with reference to Table 2, a Generate WS Ticket command is processed by a WCAp when the WCAp is in an Authenticated state.

In turn, the WCAp 802 generates a Ticket ID and a Ticket Token at step 852 ("Generate Ticket ID and Ticket Token"). The Ticket ID is an 8-byte persistent counter maintained by the WCAp 802. The Ticket Token is a one time 8-byte random identifier generated by a secure element associated with the WCAp 802, and is uniquely generated for each Generate WS Ticket command. At step 854 ("Compute Ticket"), the WCAp 802 computes a Ticket by encrypting the Ticket ID and the Ticket Token, for example, using the Wallet Server Key stored in the WCAp 802 (described in further detail above with reference to Table 1) and the Triple Data Encryption Algorithm (TDEA) (*i.e*., Applying the Data Encryption Standard (DES) cipher algorithm three times to each data block) in cipher-block chaining mode.

The WCAp 802 transmits, at step 856 ("Ticket Response"), a Ticket Response to the mobile wallet 801 including the Ticket ID, Ticket Token, and Ticket generated at steps 852 and 854. Alternatively, the Ticket Response may include an error, indicating that security conditions were not satisfied, the Wallet Server Key was not loaded and/or found, and/or the WCAp is not active and/or personalized.

At step 858 ("Transmit Ticket ID, Ticket Token, Ticket, Wallet ID"), the mobile wallet 801 transmits the Ticket ID, Ticket Token, and Ticket, along with a Wallet ID to the server 803. In turn, at step 860 ("Get Server Authentication Key"), the server 803 transmits a request, including the Wallet ID, to an Identity Management (IDM) system 804 to get a Server Authentication Key, which should match the Wallet Server Key used to encrypt the ticket at step 854. The IDM 804 is a system and/or application included in the server 803 or coupled thereto, and is used to manage authentication, authorization, and/or privileges within or across systems.

In response, at step 862 ("Generate Server Authentication Key"), the IDM 804 generates the server authentication key for the received Wallet ID, and transmits it to the server 803, at step 864 ("Transmit Server Authentication Key").

In turn, at step 866 ("Decrypt Ticket"), the server 803 decrypts the Ticket received at step 858. Once decrypted, the Ticket ID and Ticket Token used to encrypt the Ticket are verified by the server 803, at step 868 ("Verify Ticket ID and Ticket Token"). The server 803 then generates a Session Token, at step 870 ("Generate Session Token").

At step 872 ("Return Authentication"), the server 803 generates a Return Authentication by encrypting the Ticket Token and Session Token using TDEA in cipher-block chaining mode. In turn, at step 874 ("Transmit Session Token and Return Authentication"), the server 803 transmits the Session Token and Return Authorization to the mobile wallet 801.

The mobile wallet 801 transmits, at step 876 ("Verify WS Command"), a Verify WS command (described in further detail above with reference to Table 2) to the WCAp 802. Typically, a Verify WS command is used to verify that a mobile wallet established a connection with the intended server. A Verify WS command is processed by a WCAp when the WCAp is in an Authenticated state. The Verify WS command includes the Session Token and a Return Authorization. The WCAp 802 decrypts the Return Authorization at step 878 ("Decrypt Return Authorization"). Once decrypted, the Session Token and Ticket Token, which are used to encrypt the Return Authorization, are verified by the WCAp 802 at step 880 ("Verify Session Token and Ticket Token"). (INVENTOR: Please explain how such verification of Return Authorization is achieved.)

At step 882 ("Response"), the WCAp 802 transmits a response to the mobile wallet 801. The response includes information indicating whether the server was verified (*i.e*., authentication was successful), or whether an error occurred. An error indicates that a security condition was not satisfied, a command was attempted out of order, the WCAp is not personalized and/or inactive, a command included incorrect data, and/or authentication of the server failed. G. Additional Example Implementations

The present invention (*e.g*., system 100, lifecycles 200-300, diagram 500, processes 600-800, or any part(s) or function(s) thereof) can be implemented using hardware, software, or a combination thereof, and can be implemented in one or more mobile device or other processing systems. To the extent that manipulations performed by the present invention were referred to in terms of human operation, no such capability of a human operator is necessary, or desirable in most cases, in any of the operations described herein which form part of the present invention. Rather, the operations described herein are machine operations. Useful machines for performing the operations of the present invention include mobile phones, smartphones, personal digital assistants (PDAs) or similar devices.

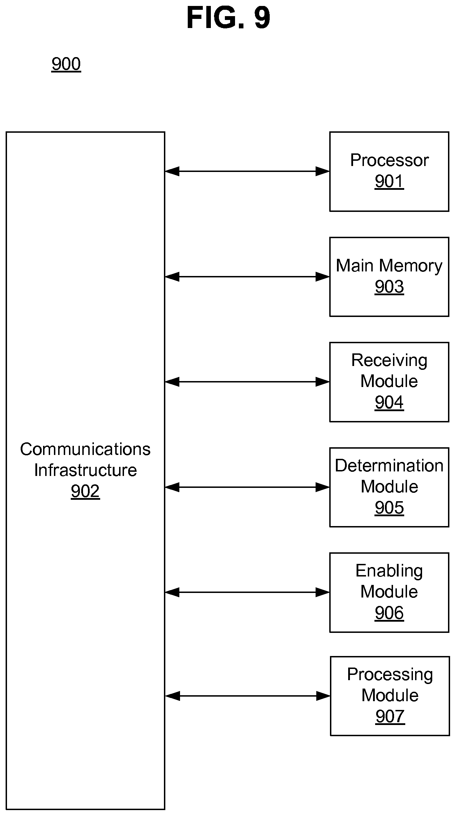

In one embodiment, the invention is directed toward one or more systems capable of carrying out the functionality described herein. An example of a system 900 is shown in FIG. 9.

The system 900 includes one or more processors, such as processor 901. The processor 901 is connected to a communication infrastructure 902 (*e.g*., communication bus, network). Various embodiments are described in terms of this exemplary system. After reading this description, it will become more apparent to a person skilled in the relevant art(s) how to implement the invention using other systems and/or architectures.

The system 900 also includes a main memory 903, which may be a non-volatile memory, or the like.

The system 900 also includes a receiving module 904 for receiving data such as commands. Receiving requests is discussed in further detail above with reference to FIGs. 3-8.

The system 900 also includes a determination module 905 for validating, authenticating, and/or comparing data, as discussed in further detail above with reference to FIGs. 3-8.

The system 900 also includes an enabling module 906 for enabling commands or operations as discussed in further detail above with reference to FIGs. 3-8.

The system 900 also includes a processing module 907 for processing commands as discussed in further detail above with reference to FIGs. 3-8.

Each of modules 904-907 may be implemented using hardware, software or a combination of the two.

The example embodiments described above such as, for example, the systems and procedures depicted in or discussed in connection with FIGs. 1-8, or any part or function thereof, may be implemented by using hardware, software or a combination of the two. The implementation may be in one or more computers or other processing systems. While manipulations performed by these example embodiments may have been referred to in terms commonly associated with mental operations performed by a human operator, no human operator is needed to perform any of the operations described herein. In other words, the operations may be completely implemented with machine operations. Useful machines for performing the operation of the example embodiments presented herein include general purpose digital computers or similar devices.

Portions of the example embodiments of the invention may be conveniently implemented by using a conventional general purpose computer, a specialized digital computer and/or a microprocessor programmed according to the teachings of the present disclosure, as is apparent to those skilled in the computer arts. Appropriate software coding may readily be prepared by skilled programmers based on the teachings of the present disclosure.

Some embodiments may also be implemented by the preparation of application-specific integrated circuits, field programmable gate arrays, or by interconnecting an appropriate network of conventional component circuits.

Some embodiments include a computer program product. The computer program product may be a non-transitory storage medium or media having instructions stored thereon or therein which can be used to control, or cause, a computer to perform any of the procedures of the example embodiments of the invention. The storage medium may include without limitation a floppy disk, a mini disk, an optical disc, a Blu-ray Disc, a DVD, a CD or CD-ROM, a micro-drive, a magneto-optical disk, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the non-transitory computer readable medium or media, some implementations include software for controlling both the hardware of the general and/or special computer or microprocessor, and for enabling the computer or microprocessor to interact with a human user or other mechanism utilizing the results of the example embodiments of the invention. Such software may include without limitation device drivers, operating systems, and user applications. Ultimately, such computer readable media further includes software for performing example aspects of the invention, as described above.

Included in the programming and/or software of the general and/or special purpose computer or microprocessor are software modules for implementing the procedures described above.

It should be understood that communications between devices in the system 900 may include communications with or through intervening systems, hardware, and/or software.

While various example embodiments of the invention have been described above, it should be understood that they have been presented by way of example, and not limitation. It is apparent to persons skilled in the relevant art(s) that various changes in form and detail can be made therein. Thus, the disclosure should not be limited by any of the above described example embodiments, but should be defined only in accordance with the following claims.

In addition, it should be understood that the figures are presented for example purposes only. The architecture of the example embodiments presented herein is sufficiently flexible and configurable, such that it may be utilized and navigated in ways other than that shown in the accompanying figures.

Further, the purpose of the Abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that the procedures recited in the claims need not be performed in the order presented.

## Claims

1. A system (100) for securing and managing applications associated with a mobile wallet (103, 602, 707, 801) comprising:
at least one memory operable to store mobile wallet data; and
a processor coupled to the at least one memory, the processor being operable to:
receive, from the mobile wallet (103, 602, 707, 801), authentication data;
determine if the authentication data is valid based on a comparison of the authentication data and the mobile wallet data;
enable processing of one or more commands by an application (WCAp, 104, 602, 706, 802) that manages the applications associated with the mobile wallet (103, 602, 707, 801) if the authentication data is valid;
receive a first command from the mobile wallet (103, 602, 707, 801);
determine if processing of the first command is enabled; and
process the first command by the application (WCAp, 104, 602, 706, 802) if processing of the first command is enabled;
**characterized in that**
the at least one memory being further operable to store a security state in which the application (WCAp, 104, 602, 706, 802) that manages the applications associated with the mobile wallet (103, 602, 707, 801) is in, the stored security state being one of three different security states,
wherein one of the security states is based on the determination that the authentication data is valid, and
wherein processing of the one or more commands is enabled further based on the security state the application (WCAp, 104, 602, 706, 802) that manages the applications associated with the mobile wallet (103, 602, 707, 801) is in indicating types of commands the application (WCAp, 104, 602, 706, 802) will process, wherein the application (WCAp, 104, 602, 706, 802) that manages the applications associated with the mobile wallet (103, 602, 707, 801)
- in a first security state of the three different security states is out of context and processes certain commands,
- in a second security state of the three different security states has been selected by processing one of the certain commands, is in context and processes additional commands that do not require authentication, and
- in a third, authenticated security state of the three different security states, which is based on the determination that the authentication data is valid, processes further additional commands that require that the application (WCAp, 104, 602, 706, 802) that manages the applications associated with the mobile wallet (103, 602, 707, 801) is in the third, authenticated security state.

2. The system (100) of Claim 1, wherein the application (WCAp, 104, 602, 706, 802) that manages the applications associated with the mobile wallet (103, 602, 707, 801) is placed in the third, authenticated security state by successfully performing a parity check or passcode verification.

3. The system (100) of Claim 1, wherein the mobile wallet data includes at least one of a (1) subscriber identity module identifier (ID), (2) device ID, (3) client ID, (4) passcode, (5) server key, (6) server key verification code, or (7) widget authentication information.

4. The system (100) of Claim 1, further comprising an application registry including one or more application identifiers each having a corresponding status.

5. The system (100) of Claim 4, the at least one memory being further operable to store an application corresponding to each of the one or more application identifiers, wherein the first command is a command to modify settings of the one or more applications.

6. The system (100) of Claim 4, the processor being further operable to receive update information corresponding to the one or more application identifiers.

7. A method for securing and managing applications associated with a mobile wallet (103, 602, 707, 801), the method comprising steps of:
receiving, from the mobile wallet (103, 602, 707, 801), authentication data;
determining if the authentication data is valid based on a comparison of the authentication data and mobile wallet data stored in at least one memory;
enabling processing of one or more commands by an application (WCAp, 104, 602, 706, 802) that manages the applications associated with the mobile wallet (103, 602, 707, 801) if the authentication data is valid;
receiving a first command from the mobile wallet (103, 602, 707, 801);
determining if processing of the first command is enabled; and
processing the first command by the application (WCAp, 104, 602, 706, 802) if processing of the first command is enabled;
**characterized in, that**
a security state, in which the application (WCAp, 104, 602, 706, 802) that manages the applications associated with the mobile wallet (103, 602, 707, 801) is in, is stored in the at least one memory, the stored security state being one of three different security states, and one of the security states being based on determining that the authentication data is valid,
wherein processing of the one or more commands is enabled further based on the security state the application (WCAp, 104, 602, 706, 802) that manages the applications associated with the mobile wallet (103, 602, 707, 801) is in indicating types of commands the application (WCAp, 104, 602, 706, 802) will process,
wherein the application (WCAp, 104, 602, 706, 802) that manages the applications associated with the mobile wallet (103, 602, 707, 801)
- in a first security state of the three different security states is out of context and processes certain commands,
- in a second security state of the three different security states has been selected by processing one of the certain commands, is in context and processes additional commands that do not require authentication, and
- in a third, authenticated security state of the three different security states, which is based on the determination that the authentication data is valid, processes further additional commands that require that the application (WCAp, 104, 602, 706, 802) that manages the applications associated with the mobile wallet (103, 602, 707, 801) is in the third, authenticated security state.

8. The method of Claim 7, wherein the application (WCAp, 104, 602, 706, 802) that manages the applications associated with the mobile wallet (103, 602, 707, 801) is placed in in the third, authenticated security state by successfully performing a parity check or passcode verification.

9. The method of Claim 7, wherein the mobile wallet data includes at least one of a (1) subscriber identity module identifier (ID), (2) device ID, (3) client ID, (4) passcode, (5) server key, (6) server key verification code, or (7) widget authentication information.

10. The method of Claim 7, wherein the at least one memory includes an application registry including one or more application identifiers each having a corresponding status.

11. The method of Claim 10, wherein the first command is a command to modify settings of one or more applications stored in the at least one memory corresponding to the one or more application identifiers.

12. The method of Claim 10, further comprising a step of receiving update information corresponding to the one or more application identifiers.

13. A non-transitory computer-readable medium having stored thereon sequences of instructions for causing one or more processors to process the steps of the method of one of the Claims 7 to 12.

## Patentansprüche

1. System (100) zum Sichern und Verwalten von mit einer mobilen Geldbörse (103, 602, 707, 801) assoziierten Anwendungen, umfassend:
zumindest einen Speicher, der fähig ist, Daten der mobilen Geldbörse zu speichern; und
einen Prozessor, der mit dem zumindest einen Speicher gekoppelt ist, wobei der Prozessor zu Folgendem fähig ist:
Empfangen, von der mobilen Geldbörse (103, 602, 707, 801), von Authentifizierungsdaten;
Ermitteln, ob die Authentifizierungsdaten gültig sind, basierend auf einem Vergleich der Authentifizierungsdaten und der Daten der mobilen Geldbörse;
Ermöglichen des Verarbeitens eines oder mehrerer Befehle durch eine Anwendung (WCAp, 104, 602, 706, 802), die die mit der mobilen Geldbörse (103, 602, 707, 801) assoziierten Anwendungen verwaltet, falls die Authentifizierungsdaten gültig sind;
Empfangen eines ersten Befehls von der mobilen Geldbörse (103, 602, 707, 801);
Ermitteln, ob das Verarbeiten des ersten Befehls aktiviert ist; und
Verarbeiten des ersten Befehls durch die Anwendung (WCAp, 104, 602, 706, 802), falls das Verarbeiten des ersten Befehls aktiviert ist;
**dadurch gekennzeichnet, dass**
der zumindest eine Speicher ferner fähig ist, einen Sicherheitszustand zu speichern, in dem sich die Anwendung (WCAp, 104, 602, 706, 802), die die mit der mobilen Geldbörse (103, 602, 707, 801) assoziierten Anwendungen verwaltet, befindet, wobei der gespeicherte Sicherheitszustand einer von drei verschiedenen Sicherheitszuständen ist,
wobei einer der Sicherheitszustände auf der Ermittlung basiert, dass die Authentifizierungsdaten gültig sind, und
wobei das Verarbeiten des einen oder der mehreren Befehle ferner basierend auf durch den gegenwärtigen Sicherheitszustand der Anwendung (WCAp, 104, 602, 706, 802), die die mit der mobilen Geldbörse (103, 602, 707, 801) assoziierten Anwendungen verwaltet, angezeigte Arten von Befehlen, die die Anwendung (WCAp, 104, 602, 706, 802) verarbeiten wird, aktiviert wird, wobei die Anwendung (WCAp, 104, 602, 706, 802), die die mit der mobilen Geldbörse (103, 602, 707, 801) assoziierten Anwendungen verwaltet,
- in einem ersten Sicherheitszustand der drei verschiedenen Sicherheitszustände außerhalb des Kontexts ist und gewisse Befehle verarbeitet,
- in einem zweiten Sicherheitszustand der drei verschiedenen Sicherheitszustände, durch Verarbeiten einer der gewissen Befehle ausgewählt, im Kontext ist und zusätzliche Befehle verarbeitet, die keine Authentifizierung erfordern, und
- in einem dritten, authentifizierten Sicherheitszustand der drei verschiedenen Sicherheitszustände, der auf der Ermittlung basiert, dass die Authentifizierungsdaten gültig sind, ferner zusätzliche Befehle verarbeitet, die erfordern, dass die Anwendung (WCAp, 104, 602, 706, 802), die die mit der mobilen Geldbörse (103, 602, 707, 801) assoziierten Anwendungen verwaltet, sich in dem dritten, authentifizierten Sicherheitszustand befindet.

2. System (100) nach Anspruch 1, wobei die Anwendung (WCAp, 104, 602, 706, 802), die die mit der mobilen Geldbörse (103, 602, 707, 801) assoziierten Anwendungen verwaltet, durch erfolgreiche Durchführung einer Paritätsprüfung oder Sicherheitscodeverifizierung in den dritten, authentifizierten Sicherheitszustand versetzt wird.

3. System (100) nach Anspruch 1, wobei die Daten der mobilen Geldbörse zumindest eines von (1) einem Teilnehmer-Identitäts-Modul-Identifikator (ID), (2) einer Geräte-ID, (3) einer Client-ID, (4) einem Sicherheitscode, (5) einem Serverschlüssel, (6) einem Serverschlüssel-Verifizierungscode oder (7) Widget-Authentifizierungsinformationen beinhalten.

4. System (100) nach Anspruch 1, das ferner eine Anwendungsregistrierung umfasst, die eine oder mehrere Anwendungskennungen, die jeweils einen entsprechenden Status aufweisen, beinhaltet.

5. System (100) nach Anspruch 4, wobei der zumindest eine Speicher ferner fähig ist, eine jeder der einen oder der mehreren Anwendungskennungen entsprechende Anwendung zu speichern, wobei der erste Befehl ein Befehl zum Modifizieren der Einstellungen der einen oder der mehreren Anwendungen ist.

6. System (100) nach Anspruch 4, wobei der Prozessor ferner fähig ist, Aktualisierungsinformationen zu empfangen, die der einen oder den mehreren Anwendungskennungen entsprechen.

7. Verfahren zum Sichern und Verwalten von mit einer mobilen Geldbörse (103, 602, 707, 801) assoziierten Anwendungen, das Verfahren umfasst die Schritte:
Empfangen, von der mobilen Geldbörse (103, 602, 707, 801), von Authentifizierungsdaten;
Ermitteln, ob die Authentifizierungsdaten gültig sind, basierend auf einem Vergleich der Authentifizierungsdaten und der Daten der mobilen Geldbörse, die in zumindest einem Speicher gespeichert sind;
Ermöglichen des Verarbeitens eines oder mehrerer Befehle durch eine Anwendung (WCAp, 104, 602, 706, 802), die die mit der mobilen Geldbörse (103, 602, 707, 801) assoziierten Anwendungen verwaltet, falls die Authentifizierungsdaten gültig sind;
Empfangen eines ersten Befehls von der mobilen Geldbörse (103, 602, 707, 801);
Ermitteln, ob das Verarbeiten des ersten Befehls aktiviert ist; und
Verarbeiten des ersten Befehls durch die Anwendung (WCAp, 104, 602, 706, 802), falls das Verarbeiten des ersten Befehls aktiviert ist;
**dadurch gekennzeichnet, dass**
ein Sicherheitszustand, in dem sich die Anwendung (WCAp, 104, 602, 706, 802), die die mit der mobilen Geldbörse (103, 602, 707, 801) assoziierten Anwendungen verwaltet, befindet, in dem zumindest einen Speicher gespeichert wird, wobei der gespeicherte Sicherheitszustand einer der drei verschiedenen Sicherheitszustände ist und einer der Sicherheitszustände auf dem Ermitteln, dass die Authentifizierungsdaten gültig sind, basiert,
wobei das Verarbeiten des einen oder der mehreren Befehle ferner basierend auf durch den gegenwärtigen Sicherheitszustand der Anwendung (WCAp, 104, 602, 706, 802), die die mit der mobilen Geldbörse (103, 602, 707, 801) assoziierten Anwendungen verwaltet, angezeigte Arten von Befehlen, die die Anwendung (WCAp, 104, 602, 706, 802) verarbeiten wird, aktiviert wird,
wobei die Anwendung (WCAp, 104, 602, 706, 802), die die mit der mobilen Geldbörse (103, 602, 707, 801) assoziierten Anwendungen verwaltet,
- in einem ersten Sicherheitszustand der drei verschiedenen Sicherheitszustände außerhalb des Kontexts ist und gewisse Befehle verarbeitet,
- in einem zweiten Sicherheitszustand der drei verschiedenen Sicherheitszustände, durch Verarbeiten einer der gewissen Befehle ausgewählt, im Kontext ist und zusätzliche Befehle verarbeitet, die keine Authentifizierung erfordern, und
- in einem dritten, authentifizierten Sicherheitszustand der drei verschiedenen Sicherheitszustände, der auf der Ermittlung basiert, dass die Authentifizierungsdaten gültig sind, ferner zusätzliche Befehle verarbeitet, die erfordern, dass die Anwendung (WCAp, 104, 602, 706, 802), die die mit der mobilen Geldbörse (103, 602, 707, 801) assoziierten Anwendungen verwaltet, sich in dem dritten, authentifizierten Sicherheitszustand befindet.

8. Verfahren nach Anspruch 7, wobei die Anwendung (WCAp, 104, 602, 706, 802), die die mit der mobilen Geldbörse (103, 602, 707, 801) assoziierten Anwendungen verwaltet, durch erfolgreiche Durchführung einer Paritätsprüfung oder Sicherheitscodeverifizierung in den dritten, authentifizierten Sicherheitszustand versetzt wird.

9. Verfahren nach Anspruch 7, wobei die Daten der mobilen Geldbörse zumindest eines von (1) einem Teilnehmer-Identitäts-Modul-Identifikator (ID), (2) einer Geräte-ID, (3) einer Client-ID, (4) einem Sicherheitscode, (5) einem Serverschlüssel, (6) einem Serverschlüssel-Verifizierungscode oder (7) Widget-Authentifizierungsinformationen beinhalten.

10. Verfahren nach Anspruch 7, wobei der zumindest eine Speicher eine Anwendungsregistrierung beinhaltet, die eine oder mehrere Anwendungskennungen, die jeweils einen entsprechenden Status aufweisen, beinhaltet.

11. Verfahren nach Anspruch 10, wobei der erste Befehl ein Befehl zum Modifizieren der Einstellungen einer oder mehrerer in dem zumindest einen Speicher gespeicherten Anwendungen, die der einen oder den mehreren Anwendungskennungen entsprechen, ist.

12. Verfahren nach Anspruch 10, ferner umfassend einen Schritt des Empfangens von Aktualisierungsinformationen, die der einen oder den mehreren Anwendungskennungen entsprechen.

13. Nicht flüchtiges, computerlesbares Medium, auf dem Sequenzen von Anweisungen gespeichert sind, die einen oder mehrere Prozessoren veranlassen, die Schritte des Verfahrens eines der Ansprüche 7 bis 12 zu verarbeiten.

## Revendications

1. Système (100) pour la sécurisation et la gestion d'applications associées à un portefeuille mobile (103, 602, 707, 801) comprenant:
au moins une mémoire utilisable pour stocker des données de portefeuille mobile; et
un processeur couplé à l'au moins une mémoire, le processeur étant utilisable pour:
recevoir, à partir du portefeuille mobile (103, 602, 707, 801), des données d'authentification;
déterminer si les données d'authentification sont valides sur base d'une comparaison des données d'authentification et des données du portefeuille mobile;
activer le traitement d'une ou plusieurs commandes par une application (WCap, 104, 602, 706, 802) qui gère les applications associées au portefeuille mobile (103, 602, 707, 801) si les données d'authentification sont valides;
recevoir une première commande à partir du portefeuille mobile (103, 602, 707, 801);
déterminer si le traitement de la première commande est activé; et
traiter la première commande par l'application (WCap, 104, 602, 706, 802) si le traitement de la première commande est activé;
**caractérisé en ce que**
l'au moins une mémoire est en outre utilisable pour stocker un état de sécurité dans lequel l'application (WCap, 104, 602, 706, 802) qui gère les applications associées au portefeuille mobile (103, 602, 707, 801) se trouve, l'état de sécurité stocké étant l'un de trois états de sécurité différents,
dans lequel un des états de sécurité est sur base de la détermination que les données d'authentification sont valides, et
dans lequel le traitement de la ou des commandes est activé en outre sur base du fait que l'état de sécurité de l'application (WCap, 104, 602, 706, 802) qui gère les applications associées au portefeuille mobile (103, 602, 707, 801) est dans l'indication de types de commandes que l'application (WCap, 104, 602, 706, 802) traitera, dans lequel l'application (WCap, 104, 602, 706, 802) qui gère les applications associées au portefeuille mobile (103, 602, 707, 801)
- dans un premier état de sécurité des trois états de sécurité différents est hors contexte et traite certaines commandes,
- dans un deuxième état de sécurité des trois états de sécurité différents a été sélectionné par le traitement d'une des certaines commandes, est dans le contexte et traite des commandes supplémentaires qui ne nécessitent pas d'authentification, et
- dans un troisième état de sécurité authentifié des trois états de sécurité différents, qui est sur base de la détermination que les données d'authentification sont valides, traite en outre des commandes supplémentaires qui exigent que l'application (WCap, 104, 602, 706, 802) qui gère les applications associées au portefeuille mobile (103, 602, 707, 801) se trouve dans le troisième état de sécurité authentifié.

2. Système (100) selon la revendication 1, dans lequel l'application (WCap, 104, 602, 706, 802) qui gère les applications associées au portefeuille mobile (103, 602, 707, 801) est placée dans le troisième état de sécurité authentifié par l'exécution avec succès d'une vérification de parité ou d'une vérification de code d'accès.

3. Système (100) selon la revendication 1, dans lequel les données de portefeuille mobile comprennent au moins un d'un (1) identifiant du module d'identité de l'abonné (ID), (2) ID du dispositif, (3) ID du client, (4) code d'accès, (5) clé du serveur, (6) code de vérification de clé du serveur, ou (7) informations d'authentification du widget.

4. Système (100) selon la revendication 1, comprenant en outre un registre d'application comprenant un ou plusieurs identifiants d'application chacun ayant un statut correspondant.

5. Système (100) selon la revendication 4, l'au moins une mémoire étant en outre utilisable pour stocker une application correspondant à chacun du ou des identifiants d'application, dans lequel la première commande est une commande pour modifier les paramètres de la ou des applications.

6. Système (100) selon la revendication 4, le processeur étant en outre utilisable pour recevoir des informations de mise à jour correspondant au ou aux identifiants d'application.

7. Procédé pour la sécurisation et la gestion d'applications associées à un portefeuille mobile (103, 602, 707, 801), le procédé comprenant des étapes de:
la réception, à partir du portefeuille mobile (103, 602, 707, 801), de données d'authentification;
la détermination de si les données d'authentification sont valides sur base d'une comparaison des données d'authentification et des données de portefeuille mobile stockées dans au moins une mémoire;
l'activation du traitement d'une ou plusieurs commandes par une application (WCap, 104, 602, 706, 802) qui gère les applications associées au portefeuille mobile (103, 602, 707, 801) si les données d'authentification sont valides;
la réception d'une première commande à partir du portefeuille mobile (103, 602, 707, 801);
la détermination de si le traitement de la première commande est activé; et
le traitement de la première commande par l'application (WCap, 104, 602, 706, 802) si le traitement de la première commande est activé;
**caractérisé en ce que**
un état de sécurité, dans lequel l'application (WCap, 104, 602, 706, 802) qui gère les applications associées au portefeuille mobile (103, 602, 707, 801) se trouve, est stocké dans l'au moins une mémoire, l'état de sécurité stocké étant l'un de trois états de sécurité différents, et l'un des états de sécurité étant basé sur la détermination que les données d'authentification sont valides,
dans lequel le traitement de la ou des commandes est activé en outre sur base du fait que l'état de sécurité de l'application (WCap, 104, 602, 706, 802) qui gère les applications associées au portefeuille mobile (103, 602, 707, 801) est dans l'indication de types de commandes que l'application (WCap, 104, 602, 706, 802) traitera,
dans lequel l'application (WCap, 104, 602, 706, 802) qui gère les applications associées au portefeuille mobile (103, 602, 707, 801)
- dans un premier état de sécurité des trois états de sécurité différents est hors contexte et traite certaines commandes,
- dans un deuxième état de sécurité des trois états de sécurité différents a été sélectionné par le traitement d'une des certaines commandes, est dans le contexte et traite des commandes supplémentaires qui ne nécessitent pas d'authentification, et
- dans un troisième état de sécurité authentifié des trois états de sécurité différents, qui est sur base de la détermination que les données d'authentification sont valides, traite en outre des commandes supplémentaires qui exigent que l'application (WCap, 104, 602, 706, 802) qui gère les applications associées au portefeuille mobile (103, 602, 707, 801) se trouve dans le troisième état de sécurité authentifié.

8. Procédé selon la revendication 7, dans lequel l'application (WCap, 104, 602, 706, 802) qui gère les applications associées au portefeuille mobile (103, 602, 707, 801) est placée dans le troisième état de sécurité authentifié par l'exécution avec succès d'une vérification de parité ou d'une vérification de code d'accès.

9. Procédé selon la revendication 7, dans lequel les données de portefeuille mobile comprennent au moins un d'un (1) identifiant du module d'identité de l'abonné (ID), (2) ID du dispositif, (3) ID du client, (4) code d'accès, (5) clé du serveur, (6) code de vérification de clé du serveur, ou (7) informations d'authentification du widget.

10. Procédé selon la revendication 7, dans lequel l'au moins une mémoire comprend un registre d'application comprenant un ou plusieurs identifiants d'application chacun ayant un statut correspondant.

11. Procédé selon la revendication 10, dans lequel la première commande est une commande pour modifier des paramètres d'une ou plusieurs applications stockées dans l'au moins une mémoire correspondant au ou aux identifiants d'application.

12. Procédé selon la revendication 10, comprenant en outre une étape de réception d'informations de mise à jour correspondant au ou aux identifiants d'application.

13. Support lisible par ordinateur non transitoire y ayant stocké des séquences d'instructions pour amener le ou les processeurs à traiter les étapes selon l'une quelconque des revendications 7 à 12.
